# EUROPÄISCHE PATENTANMELDUNG

(11) **EP 4 039 989 A1**
(43) Veröffentlichungstag der Anmeldung: **10.08.2022**
(21) Anmeldenummer: 22155174.0
(22) Anmeldetag: 04.02.2022
(51) Int. Cl.: F16B 12/20, F16B 5/00, F16B 12/24

(54) **BEFESTIGUNGSSYSTEM ZUM VERBINDEN ZWEIER WERKSTÜCKE IN EINEM MÖBELSYSTEM**

(30) Priorität: 05.02.2021 DE 102021102737
(71) Anmelder: Kern, Robert, 85777 Fahrenzhausen (DE)
(72) Erfinder: Kern, Robert, 85777 Fahrenzhausen (DE)
(74) Vertreter: Bobbert & Partner Patentanwälte PartmbB

(57) **Zusammenfassung**

Die vorliegende Erfindung betrifft ein Befestigungssystem (300), welches wenigstens eine erste Befestigungseinrichtung (500) mit einem ersten Schnittprofil und wenigstens eine zweite Befestigungseinrichtung (100) mit einem zweiten Schnittprofil aufweist, zum Verbinden wenigstens eines ersten Werkstücks (W1), z. B. eines Fachbodens (400), mit einem zweiten Werkstück, z. B. einer Trägerstruktur (200). Das erste Schnittprofil und das zweite Schnittprofil sind derart ausgestaltet, dass die erste Befestigungseinrichtung (500) und die zweite Befestigungseinrichtung (100) mittels des ersten und des zweiten Schnittprofils form- und/oder kraftschlüssig miteinander verbindbar sind. Die erste Befestigungseinrichtung (500) ist eine in das erste Werkstück (W1) gefräste Nut oder weist eine solche auf. Die zweite Befestigungseinrichtung (100) ist zum Einschrauben in das zweite Werkstück ausgestaltet.

## Beschreibung

Die vorliegende Erfindung betrifft ein Befestigungssystem gemäß Anspruch 1, ein System gemäß Anspruch 7 sowie ein Möbelsystem gemäß Anspruch 11, sie betrifft ferner ein Verfahren gemäß Anspruch 14 bzw. gemäß jeweils der Oberbegriffe oder Gattungsbegriffe dieser Ansprüche.

Aus dem Möbelbau sind Erzeugnisse wie Regale, Tische, Schränke und mehr bekannt, die aus mehreren Werkstücken gefertigt wurden, welche mittels wenigstens eines Befestigungssystems miteinander verbunden wurden.

Aufgabe der vorliegenden Erfindung ist es, ein weiteres Befestigungssystem zum Verbinden von zwei Elementen oder Werkstücken, insbesondere eines Möbelsystems, z. B. Fachböden mit Trägerstrukturen, bereitzustellen. Ferner sollen ein System zum Befestigen von wenigstens zwei Komponenten eines Möbelsystems sowie ein Möbelsystem angegeben werden. Schließlich soll ein Verfahren zum Vorbereiten von zwei Werkstücken (oder Möbelteilen) zu deren Verbindung miteinander angegeben werden.

Die erfindungsgemäße Aufgabe kann durch ein Befestigungssystem mit den Merkmalen des Anspruchs 1 gelöst werden. Sie kann ferner mit dem System mit den Merkmalen des Anspruchs 7, einem Möbelsystem mit den Merkmalen des Anspruchs 11 sowie einem Verfahren mit den Merkmalen des Anspruchs 14 gelöst werden.

Erfindungsgemäß wird somit ein Befestigungssystem vorgeschlagen, welches wenigstens eine erste Befestigungseinrichtung mit einem ersten Schnittprofil und wenigstens eine zweite Befestigungseinrichtung mit einem zweiten Schnittprofil aufweist. Das erfindungsgemäße Befestigungssystem dient zum Verbinden wenigstens eines ersten Werkstücks oder Möbelteils, z. B. eines Fachbodens, mit einem zweiten Werkstück oder Möbelteils, z. B. einer Trägerstruktur.

Hierbei sind das erste Schnittprofil und das zweite Schnittprofil derart ausgestaltet, dass die erste Befestigungseinrichtung und die zweite Befestigungseinrichtung, insbesondere direkt oder indirekt, mittels des ersten und des zweiten Schnittprofils form- und/oder kraftschlüssig miteinander verbindbar sind.

Die erste Befestigungseinrichtung weist eine Nut (alternativ und hier synonym verwendbar bzw. in beliebigen Ausführungsformen austauschbar: profilierte Nut, profilierter Fräsweg oder profilierte Rinne), welche vorzugsweise keinen rechteckigen Querschnitt oder wenigstens einen nichtrechteckigen Querschnitt hat, auf, welche in das erste Werkstück gefräst ist, oder besteht aus einer solchen Nut. Die zweite Befestigungseinrichtung ist zum Einbringen, vorzugsweise zum Einschrauben, in das zweite Werkstück ausgestaltet.

Erfindungsgemäß wird weiter ein System zum Befestigen, insbesondere zum lösbaren Befestigen, von wenigstens zwei Komponenten eines Möbelsystems miteinander, oder zu deren Vorbereitung, vorgeschlagen.

Das System umfasst wenigstens einen Fräser zum Fräsen einer Nut im ersten Werkstück, wobei die Nut eine erste Befestigungseinrichtung darstellt. Der Fräser ist hierbei zum Fräsen des ersten Schnittprofils konfiguriert, vorzugweise bei lateraler Bewegung des Fräsers. Die erste Befestigungseinrichtung bzw. die Nut ist hierbei dergestalt dimensioniert bzw. konfiguriert, dass sie wenigstens eine zweite Befestigungseinrichtung, welche ihrerseits vorzugsweise eine Hülse sowie eine Schraube zum Durchführen durch die Hülse ist oder aufweist und vorzugsweise an einem zweiten Werkstück befestigt ist, in sich aufnehmen kann.

Die zweite Befestigungseinrichtung weist hierbei ein zweites Schnittprofil auf. Das erste Schnittprofil und das zweite Schnittprofil sind derart ausgestaltet, dass die erste Befestigungseinrichtung und die zweite Befestigungseinrichtung, insbesondere direkt oder indirekt, mittels des ersten und des zweiten Schnittprofils form- und/oder kraftschlüssig miteinander verbindbar sind, in wenigstens einer Richtung, welche der Richtung einer Längsachse der zweiten Befestigungseinrichtung entsprechen kann.

Alternativ oder ergänzend weist das System wenigstens ein erfindungsgemäßes Befestigungssystem auf.

Erfindungsgemäß wird ein Möbelsystem, insbesondere ein Regalsystem, vorgeschlagen, welches wenigstens ein erfindungsgemäßes Befestigungssystem umfasst. Das Möbelsystem weist vorzugsweise zumindest das erste Werkstück und das zweite Werkstück auf.

Das erfindungsgemäße Verfahren zum Vorbereiten eines ersten Werkstücks zu seiner Verbindung mit einem zweiten Werkstück umfasst den Schritt eines Bereitstellens eines erfindungsgemäßen Systems.

Das Verfahren umfasst weiter den Schritt eines Bereitstellens eines ersten Werkstücks und eines zweiten Werkstücks.

Als weiteren Schritt umfasst das Verfahren ein Erzeugen einer Nut im ersten Werkstück mittels des Fräsers des Systems.

Das Verfahren umfasst weiter ein Einbringen, z. B. ein Einschrauben, eines zweiten Befestigungsmittels, beispielsweise einer Schraube umfasst von einer Hülse, in das zweite Werkstück.

Weitere Verfahrensschritte sind rein optional.

Unter einem Möbelsystem kann erfindungsgemäß jedes Möbel, insbesondere ein Regal, ein Board, ein Sideboard, ein Stuhl, ein Tisch, ein Bett zu verstehen sein, welches die Merkmale eines der angehängten Ansprüche aufweist. Insbesondere kann der Begriff Möbelsystem auf jedes Regal zutreffen, welches Fachböden sowie Seitenwände zur Stützung der Fachböden aufweist.

Erfindungsgemäße Ausführungsformen können manche, einige oder alle der folgenden Merkmale in beliebiger Kombination aufweisen, soweit dies für den Fachmann nicht erkennbar technisch unmöglich ist. Vorteilhafte Weiterbildungen der vorliegenden Erfindung sind jeweils auch Gegenstand der Unteransprüche und Ausführungsformen. Schritte, die zum Erzielen des erfindungsgemäßen Befestigungssystems oder seiner Nut in jeder hier offenbarten Ausführungsform führen oder erforderlich sind, sind hiermit ebenfalls als optionale Schritte des erfindungsgemäßen Verfahrens offenbart.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße Ausführungsformen erläutern.

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung, dass ein Zahlenwort wie beispielsweise "ein" alternativ als "genau ein" gemeint sein kann, wo immer dies für den Fachmann erkennbar technisch möglich ist. Beides ist von der vorliegenden Erfindung umfasst und gilt für alle hierin verwendeten Zahlenworte.

Wenn hierin von einer Ausführungsform die Rede ist, so stellt diese eine erfindungsgemäße, beispielhafte Ausführungsform dar.

Wenn hierin offenbart ist, dass der erfindungsgemäße Gegenstand ein oder mehrere Merkmale in einer bestimmten Ausführungsform aufweist, so ist hierin jeweils auch offenbart, dass der erfindungsgemäße Gegenstand genau dieses oder diese Merkmale in anderen, ebenfalls erfindungsgemäßen Ausführungsformen ausdrücklich nicht aufweist, z. B. im Sinne eines Disclaimers. Für jede hierin genannte Ausführungsform gilt somit, dass die gegenteilige Ausführungsform, beispielsweise als Negation formuliert, ebenfalls offenbart ist.

In manchen Ausführungsformen des erfindungsgemäßen Befestigungssystems ist die zweite Befestigungseinrichtung eine Hülse mit einer Durchgangsöffnung sowie eine durch oder in der Durchgangsöffnung geführte Schraube oder umfasst eine solche Hülse mit Durchgangsöffnung mit hindurchgeführter Schraube. Die Richtung, welche senkrecht auf einer Öffnungsebene der Durchgangsöffnung steht, definiert vorzugsweise eine Längsrichtung der Hülse.

Die in der Hülse aufgenommene Schraube erlaubt vorteilhaft ein Spreizen der Hülse und somit das Aufweiten der Außenwand der Hülse unter Veränderung deren Geometrie. Sie weist senkrecht zu ihrer Längsachse vorzugsweise einen runden Querschnitt auf.

Die Hülse umfasst, vorzugsweise an einem ihrer Enden, eine Distanzscheibe, welche vorzugsweise als Scheibe oder Rand einer Scheibe ausgestaltet ist, also mit zwei im Wesentlichen parallelen Flächen. Diese Flächen sind vorzugsweise ebenfalls kreisförmig und senkrecht zur Längsachse der Hülse angeordnet.

Die Hülse umfasst, vorzugsweise an ihrem der Distanzscheibe gegenüberliegenden Ende, eine Stirnfläche. Die Stirnfläche der Hülse hat in manchen Ausführungsformen einen geringeren (Außen-)Umfang bzw. (Außen-)Durchmesser als die Distanzscheibe.

In einigen Ausführungsformen des Befestigungssystems weisen das erste Schnittprofil und das zweite Schnittprofil jeweils ein Schwalbenschwanzprofil oder ein Trapezprofil auf oder bestehen hieraus.

In manchen Ausführungsformen ist oder umfasst keines der Schnittprofile ein(en) Doppelkegel oder eine Aufeinanderfolge von Kegeln oder kegelförmigen Abschnitten.

In einigen Ausführungsformen umfasst das Schnittprofil genau einen Hinterschnitt, nicht zwei oder mehr. Dies kann vorteilhafterweise dazu beitragen, dass die betreffende Komponente billiger zu fertigen ist. Ein weiterer Vorteil kann darin bestehen, dass die Verbindung der beiden Werkstücke durch diese Ausgestaltung der vorliegenden Erfindung mechanisch bestimmter ist. Der Hinterschnitt weist vorzugsweise einen kleineren Durchmesser als die Distanzscheibe oder die Stirnfläche auf. Er kann beispielsweise einen Durchmesser von 4 mm bis 8 mm, z. B. von 6 mm, aufweisen.

In manchen Ausführungsformen verläuft die erste Befestigungseinrichtung bzw. Nut im ersten Werkstück entlang eines Fräswegs mit einem Anfang und einem Ende. Hierbei liegt der Fräsweg in einer Ebene des ersten Werkstücks, und weder der Anfang noch das Ende des Fräswegs ist Teil eines Randes des ersten Werkstücks in dieser Ebene.

Der Fräsweg führt in einigen Ausführungsformen nicht bis an den Rand des ersten Werkstücks oder über diesen hinaus. In anderen hingegen schon.

In manchen Ausführungsformen hat der Fräsweg im ersten Werkstück einen gekrümmten Verlauf.

In einigen Ausführungsformen liegt die Nut in einer Gehrungsfläche oder öffnet sich zu einer solchen.

In manchen Ausführungsformen wird oder wurde die Nut erzeugt, indem mittels des Fräsers an einem Anfang des Fräswegs, zumeist senkrecht, in die Oberfläche des ersten Werkstücks hineingefräst wird oder wurde, der Fräser dann entlang des Fräswegs im Fräseingriff mit dem ersten Werkstück geführt wird oder wurde, und an einem Ende des Fräswegs, zumeist senkrecht, wieder aus dem ersten Werkstück herausgeführt wird oder wurde.

Entlang des Fräswegs kann der Fräser in beliebigen Ausführungsformen parallel zur Oberfläche geführt werden oder worden sein, also bei unveränderter Fräs- oder Nuttiefe. In anderen Ausführungsformen kann der Fräser entlang des Fräswegs zunehmend oder abnehmend tief in das Werkstück hinein oder aus diesem herausgeführt werden oder worden sein. Die so erzeugte Nut oder ihr Nutgrund verläuft also nicht oder nicht nur oder nicht streng parallel zur Oberfläche des ersten Werkstücks, sondern unter zu- oder abnehmendem Abstand zu Letzterer. Dabei kann die Zu- oder Abnahme vorzugsweise linear oder beispielsweise segmentbogenförmig sein, oder nicht.

In manchen Ausführungsformen kann der Fräser zum Fräsen der Nut entlang des Fräswegs erst mit zunehmender und anschließend mit abnehmender Tiefe entlang des Fräswegs im Werkstück geführt werden oder worden sein, oder umgekehrt. Damit kann eine Nut entstehen, oder entstanden sein, deren Nuttiefe zunächst zunimmt um im weiteren Verlauf des Fräswegs wieder abzunehmen, oder umgekehrt. Es kann somit ein konkaver oder ein konvexer Verlauf des Nutgrundes (in einem Längsschnitt, z. B.) vorliegen, z. B. ein gewölbter Nutgrund, ebenso ein wellenförmiger, also abwechselnd tiefer und weniger tiefer Nutgrund. Die hierzu jeweils erforderlichen Schritte sind Gegenstand auch von Ausführungsformen des erfindungsgemäßen Verfahrens.

In einigen Ausführungsformen weist das erfindungsgemäße Befestigungssystem weiter wenigstens einen lösbar in die Nut einsetzbaren oder eingesetzten Stopper oder Anschlag auf. Dieser dient zum Begrenzen einer Verschiebbarkeit der zweiten Befestigungseinrichtung entlang der ersten Befestigungseinrichtung, d. h. entlang der Nut.

Ein solcher Stopper kann alternativ oder ergänzend am zweiten Werkstück fixiert, z. B. eingesteckt, eingeschraubt, eingeklebt, usw., vorliegen. Der Stopper kann in einem Abstand zur zweiten Befestigungsvorrichtung derart am zweiten Werkstück festgelegt sein, dass ein Verschieben der zweiten Befestigungseinrichtung entlang des Fräswegs durch das Anschlagen oder Anliegen des, sich gemeinsam mit der zweiten Befestigungseinrichtung bewegenden, Stoppers am Ende der Nut begrenzt wird.

Wenn hierin von einem Schnittprofil die Rede ist, so kann dies ein Querschnittprofil oder Längsschnittprofil oder anderes Schnittprofil der ersten Befestigungseinrichtung und/oder der zweiten Befestigungseinrichtung sein.

Die erste Befestigungseinrichtung und die zweite Befestigungseinrichtung weisen in einer erfindungsgemäßen Ausführungsform in wenigstens je einem Schnittprofil (Querschnittprofil oder Längsschnittprofil oder anderes Schnittprofil) eine nahezu oder vollständig zueinander komplementäre Form auf.

Insbesondere kann zum Beispiel eine Außenkontur oder ein Außenumfang der zweiten Befestigungseinrichtung oder eines Teils oder Abschnitts derselben eine zu einer Innenkontur oder einem Innenumfang wenigstens eines Abschnitts der ersten Befestigungseinrichtung komplementäre Form aufweisen.

Im Sinne der vorliegenden Erfindung kann "ein Querschnitt" in einer Ebene liegen, welche parallel oder senkrecht zu einer Haupterstreckungsebene des Werkstücks oder der Oberfläche, in welcher die zweite Befestigungseinrichtung eingebracht oder eingeschraubt oder die Nut eingefräst ist, liegt. Ebenso kann in bestimmten erfindungsgemäßen Ausführungsformen der Längsschnitt in derselben Ebene liegen.

Insbesondere kann in bestimmten Ausführungsformen der Längsschnitt der ersten oder der zweiten Befestigungseinrichtung in derselben Ebene wie der Querschnitt der jeweils anderen Befestigungseinrichtung liegen.

Der Begriff Querschnitt kann sich auf einen Schnitt in der Richtung der Breite des betreffenden Bauteils (z. B. Befestigungseinrichtung oder Werkstück) beziehen.

Der Begriff Längsschnitt kann sich auf einen Schnitt in der Richtung der Länge eines Bauteils, z. B. der zweiten Befestigungseinrichtung beziehen.

Die erste Befestigungseinrichtung und die zweite Befestigungseinrichtung weisen in einer erfindungsgemäßen Ausführungsform eine zueinander nahezu oder vollständig komplementäre Form derart auf, dass das erste Schnittprofil (Querschnittprofil oder Längsschnittprofil oder anderes Schnittprofil) das zweite Schnittprofil (Querschnittprofil oder Längsschnittprofil oder anderes Schnittprofil) ganz oder im Wesentlichen ganz oder nahezu vollständig ausfüllt oder umgekehrt.

In manchen erfindungsgemäßen Ausführungsformen weisen die erste Befestigungseinrichtung und die zweite Befestigungseinrichtung zueinander komplementäre Querschnittprofile derart auf, dass das Längs- oder Querschnittprofil der ersten Befestigungseinrichtung das Längs- oder Querschnittprofil der zweiten Befestigungseinrichtung im Wesentlichen ganz oder nahezu vollständig ausfüllt oder umgekehrt. Die Quer- oder Längsschnittprofile der ersten Befestigungseinrichtung und der zweiten Befestigungseinrichtung können in solchen Ausführungsformen - müssen aber nicht - zueinander komplementär sein. Dies trifft beispielsweise in Ausführungsformen zu, in denen sich eine Befestigungseinrichtung in ihrer Längenabmessung nur abschnittsweise im Bereich der anderen Befestigungseinrichtung befindet (z. B. Anordnung eines Schraubenkopfs in der Nut).

Ein Schnittprofil (Querschnittprofil oder Längsschnittprofil oder anderes Schnittprofil) kann erfindungsgemäß das Profil oder die Kontur oder die Fläche oder die Erstreckung usw. eines Schnitts oder einer Schnittfläche oder einer Schnittdarstellung durch das entsprechende Bauteil (Befestigungseinrichtung) sein.

Die erste Befestigungseinrichtung kann die zweite Befestigungseinrichtung oder Teile derselben, z. B. einen Kopf der zweiten Befestigungseinrichtung, vollständig oder wenigstens abschnittsweise, insbesondere entlang eines Umfangsabschnitts hiervon, umgreifen oder in sich aufnehmen.

Die Verbindung der ersten Befestigungseinrichtung mit der zweiten Befestigungseinrichtung erfolgt in manchen erfindungsgemäßen Ausführungsformen direkt, in anderen indirekt.

Zur Herstellung der form- und/oder kraftschlüssigen Verbindung zwischen der ersten Befestigungseinrichtung und der zweiten Befestigungseinrichtung, kann in einer erfindungsgemäßen Ausführungsform die erste oder die zweite Befestigungseinrichtung über die jeweils (wenigstens eine) andere Befestigungseinrichtung aufgeschoben werden oder umgekehrt.

In bestimmten erfindungsgemäßen Ausführungsformen besteht die Kraftschlüssigkeit nur in einer Raumrichtung oder in nur zwei Raumrichtungen oder in allen Raumrichtungen bis auf einer.

In bestimmten erfindungsgemäßen Ausführungsformen besteht die Formschlüssigkeit nur in einer Raumrichtung oder nur in zwei Raumrichtungen oder in allen Raumrichtungen bis auf einer.

In bestimmten erfindungsgemäßen Ausführungsformen besteht im Gebrauchszustand der Befestigungseinrichtung Spiel in einer oder in zwei Raumrichtungen.

In bestimmten erfindungsgemäßen Ausführungsformen ist eine Zugbelastung über die Verbindung der ersten Befestigungseinrichtung mit der zweiten Befestigungseinrichtung hinweg möglich und beabsichtigt.

Insbesondere kann die hierzu auszuführende Aufschiebbewegung in einer Ebene parallel zu einer Haupterstreckungsebene des ersten Werkstücks und/oder in einer Ebene senkrecht zu einer Haupterstreckungsebene des zweiten Werkstücks erfolgen bzw. das Befestigungssystem entsprechend ausgestaltet sein.

Die erste Befestigungseinrichtung und die zweite Befestigungseinrichtung können in einer erfindungsgemäßen Ausführungsform - auch nach bzw. während des Verbindens der Werkstücke - gegeneinander gleitbar oder verschiebbar angeordnet sein. Das zweite Werkstück kann zumindest in dem Moment, in welchem er mit dem zweiten Werkstück verbunden wird, relativ zum ersten Werkstück beweglich sein.

Unter dem Begriff "Befestigungssystem", wie er hierin verwendet wird, ist in einer erfindungsgemäßen Ausführungsform ein System zu verstehen, das aus wenigstens der ersten Befestigungseinrichtung und wenigstens der zweiten Befestigungseinrichtung besteht oder diese oder solche Elemente aufweist.

Der Begriff "erste Befestigungseinrichtung", wie er hierin verwendet wird, bezeichnet z. B. ein Aufnahme- und/oder Führungselement, in dem unterschiedliche Bauteile eingesetzt und/oder bewegt werden können. Die erste Befestigungseinrichtung ist in einer erfindungsgemäßen Ausführungsform z. B. eine Linearführung, insbesondere eine Nut.

Die zweite Befestigungseinrichtung weist einen Schraubenabschnitt auf. Dieser kann ein Eingriff für einen Inbusschlüssel, einen Schraubendreher, einen Kreuzschlitzdreher, einen stern- oder polyederförmigen Schraubendreher und dergleichen aufweisen.

Weist die Hülse eine Distanzscheibe auf, so kann diese ausgestaltet sein in einer Form, welche einen runden oder keinen runden Querschnitt aufweist.

In bestimmten Ausführungsformen ist die Anordnung mehrerer erster (und/oder zweiter) Befestigungseinrichtungen vorgesehen.

Die erste Befestigungseinrichtung und/oder die zweite Befestigungseinrichtung können mit einem Querschnitt ausgestaltet sein, welcher einen oder genau einen Hinterschnitt aufweist.

Die zweite Befestigungseinrichtung kann aus Metall, Kunststoff, wie Hartkunststoff, Holz, Keramik oder anderen Materialien bestehen oder eines oder mehrere solcher Materialien aufweisen. Die zweite Befestigungseinrichtung können ebenso aus einer Kombination derartiger Materialien, sowie Verbundmaterialien, wie beispielsweise faserverstärktem Kunststoff o. ä. bestehen oder abschnittsweise aus diesen ausgestaltet sein.

Die zweite Befestigungseinrichtung kann, zumindest abschnittsweise, z. B. was die von ihr optional umfasste Schraube betrifft, aus einem Edelstahl, einem rostfreien Stahl, einer Legierung, oder dergleichen hergestellt sein oder dieses aufweisen.

Die zweite Befestigungseinrichtung kann, zumindest abschnittsweise, verchromt sein. Sie kann mittels Spritzguss, Strangguss, Strangziehverfahren, Extruderverfahren oder dergleichen hergestellt sein. Sie kann oberfächenbehandelt (entgratet, sandgestrahlt, geschliffen, usw.), beschichtet, lackiert oder gefärbt sein. Sie kann ein geschnittenes Gewinde aufweisen, sie kann ein gedrehtes oder ein gegossenes Gewinde aufweisen.

Allgemein kann die form- und/oder kraftschlüssige Verbindung zwischen der ersten Befestigungseinrichtung und der zweiten Befestigungseinrichtung (oder mehreren zweiten Befestigungseinrichtungen) erreicht werden, indem wenigstens die erste Befestigungseinrichtung (einen oder mehrere) Abschnitte aufweist, die eine Aufnahme wenigstens eines Teils der zweiten Befestigungseinrichtung (oder mehrerer zweiter Befestigungseinrichtungen) zulassen. Unter dem Begriff "Aufnahme" kann in bestimmten Ausführungsformen ein - wenigstens abschnittsweises - Umgreifen der zweiten Befestigungseinrichtung bzw. eines Teils oder Abschnitts derselben durch einen Teil bzw. Abschnitt der ersten Befestigungseinrichtung verstanden werden.

Die Verbindung zwischen der ersten Befestigungseinrichtung und der zweiten Befestigungseinrichtung kann in einer Art Schlüssel-Schloss-Prinzip erfolgen. In bestimmten Ausführungsformen können die Form und/oder die Abmessungen der zur Verbindung vorgesehenen Teile oder Abschnitte der ersten Befestigungseinrichtung und der zweiten Befestigungseinrichtung aufeinander abgestimmt sein.

Der Begriff "Fachboden", wie er hierin als Beispiel für ein erstes Werkstück verwendet wird, bezeichnet in einer erfindungsgemäßen Ausführungsform eine Platte, die dafür vorgesehen ist, in einem Regal, einem Schrank o.ä. befestigt zu werden. Der Fachboden, auch als Einlegeboden oder Einlegeplatte bezeichnet, kann eingehängt, eingeschraubt, eingeschoben, eingelegt oder in ähnlicher Weise befestigt werden.

Der Fachboden kann auch eine Rückwand, wie beispielsweise die Rückwand eines Regals, sein.

Der Fachboden, oder jedes der Werkstücke, kann aus Holz, Kunststoff, Glas, Metall oder anderen Materialien bestehen, ebenso aus einer Kombination derartiger Materialien, sowie Verbundmaterialien, wie beispielsweise faserverstärktem Kunststoff o.ä. hergestellt sein.

Der Fachboden kann eine beliebige, je nach Zweck und/oder Wunsch und/oder Erfordernis ausgewählte Dicke aufweisen. Die Verwendung des hierin beschriebenen Befestigungssystems ist vorteilhaft mit einer beliebigen (vertikalen) Dicke bzw. Stärke oder Höhe des Fachbodens realisierbar.

Die Dicke des Fachbodens ist in manchen erfindungsgemäßen Ausführungsformen größer als eine Erstreckung einer hieran angeordneten, als Schiene ausgestalteten Befestigungseinrichtung in Richtung der Dicke des Fachbodens.

In manchen Ausführungsformen ist die erste Befestigungseinrichtung im Wesentlichen ganz oder nahezu vollständig in eine Fläche des ersten Werkstücks eingearbeitet und steht dabei nicht über diese Fläche her vor.

Das vorstehend bezüglich der Anordnung der ersten oder zweiten Befestigungsstruktur zum Fachboden oder zum ersten Werkstück Gesagte trifft in einigen erfindungsgemäßen Ausführungsformen analog für die Trägerstruktur oder das zweite Werkstück zu.

Der Begriff "Trägerstruktur", wie er hierin verwendet wird, bezeichnet in einer erfindungsgemäßen Ausführungsform eine Wand, die als Seiten- oder Rückenwand ausgeführt sein kann, eine Mauer, eine Platte o.ä., die dafür geeignet ist, den Fachboden (oder mehrere Fachböden) mittels der ersten Befestigungseinrichtung und der zweiten Befestigungseinrichtung an oder in der Trägerstruktur zu befestigen.

Die zweite Befestigungseinrichtung kann in bestimmten Ausführungsformen nicht an die Trägerstruktur geklebt, gedübelt, genagelt, gelötet, geschweißt, eingehängt, und/oder in anderer Weise als eingeschraubt, befestigt werden oder sein.

In bestimmten Ausführungsformen ist die zweite Befestigungseinrichtung als Bauteil ausgestaltet, welches separat vom zugehörigen zweiten Werkstück vorliegt oder gefertigt ist.

Die erste Befestigungseinrichtung ist in diesen Ausführungsformen unlösbarer Teil des ersten Werkstücks. Die erste Befestigungseinrichtung ist in manchen Ausführungsformen durch Entfernen von Material des ersten Werkstücks gefertigt, vorzugsweise nur durch Entfernen von solchem Material.

Erfindungsgemäß werden die erste Befestigungseinrichtung und die zweite Befestigungseinrichtung mittels eines form- und/oder kraftschlüssigen Schnittprofils miteinander verbunden.

Dies kann beispielsweise derart ausgeführt werden, dass einerseits die erste Befestigungseinrichtung einen im Querschnitt ovalen oder rechteckigen, z. B. trapezförmigen, Innenquerschnitt aufweist, andererseits die Hülse der zweiten Befestigungseinrichtung einen im Längsschnitt ovalen oder rechteckigen, z. B. trapezförmigen, Außenschnitt aufweist. Die dazu notwendigen Toleranzmaße für eine spielfreie Führung der zweiten Befestigungseinrichtung in der ersten Befestigungseinrichtung (sogenannte Spielpassungen) sind dem Fachmann bekannt und werden hier nicht weiter erläutert.

In einer Ausführungsform des erfindungsgemäßen Befestigungssystems ist oder wird das Schnittprofil (z. B. Längs- oder Querschnittprofil) als Trapezform ausgeführt, vorzugsweise als Trapez oder als gleichschenkliges Trapez (hierin auch als Schwalbenschwanzform bezeichnet), oder weist eine solche Form auf.

In bestimmten Ausführungsformen kann das Trapez derart ausgerichtet sein, dass die längere der beiden parallelen Seiten des Trapezes zum Nutgrund hin angeordnet wird oder ist. Eine solche Anordnung kann den Vorteil haben, dass die zweite Befestigungseinrichtung, nachdem sie in die erste Befestigungseinrichtung eingeführt wurde, nur noch relativ zur ersten Befestigungseinrichtung in deren Längsrichtung bewegt werden kann, nicht aber mehr in einer hierzu senkrechten oder sich anders erstreckenden Richtung. Auf diese Weise kann vorteilhaft ein Verrutschen des Fachbodens oder ein Wackeln desselben minimiert oder gar vermieden werden.

In einer weiteren Ausführungsform des erfindungsgemäßen Befestigungssystems ist die zweite Befestigungseinrichtung aus Kunststoff oder eine Legierung oder einer Kombination Bauteilen aus Kunststoff (z. B. die Hülse mit der Distanzscheibe) und einer Legierung (z. B. Stahl, z. B. die Schraube) hergestellt oder weisen dergleichen auf. Der Kunststoff kann ein Hartkunststoff sein.

In bestimmten Ausführungsformen können auch andere Materialien für die zweite Befestigungseinrichtung verwendet werden, um eine geeignete Gleitpaarung zwischen erster Befestigungseinrichtung und zweiter Befestigungseinrichtung zu erzielen, beispielsweise faserverstärkter Kunststoff für zweite Befestigungseinrichtung oder Teile hiervon.

In einer Ausführungsform ist das Schraubengewinde an einem Schaft der zweiten Befestigungseinrichtung je nach Material zweiten Werkstücks ausgewählt. Beispielsweise können bei Holz oder Kunststoff des zweiten Werkstücks selbstschneidende Gewinde mit oder ohne Vorbohrung, abhängig von der Holz- oder Kunststoffart und den Gewindedurchmessern im Holz oder Kunststoff, verwendet werden.

Ebenfalls können Dübel verwendet werden. Der Dübel kann abhängig vom Material der Trägerstruktur bestimmt sein.

In anderen Ausführungsformen der vorliegenden Erfindung können Metallschrauben verwendet werden, z. B. wenn das das zweite Werkstück aus Metall besteht und ein entsprechendes Metallgewinde aufweist. Ebenfalls können auch Dübel für Metallschrauben verwendet werden, die in nicht-metallische Trägermaterialien eingesetzt werden.

Die Schraube der zweiten Befestigungseinrichtung kann als Innensechskantschraube, Schlitzschraube, Kreuzschlitzschraube, Torxschraube, Vierkantschraube o.ä. ausgeführt sein.

In einer weiteren erfindungsgemäßen Ausführungsform weist die zweite Befestigungseinrichtung wenigstens eine Distanzscheibe auf, welche eine Tiefe, mit welcher die entsprechende Befestigungseinrichtung in ihrem Gebrauch in die Nut des ersten Werkstücks einbringbar ist, beschränken kann oder hierzu vorgesehen ist.

Der Begriff "Distanzscheibe", wie er hierin verwendet wird, bezeichnet eine Scheibe mit einer definierten Dicke und einem bestimmten Außen- und Innendurchmesser. Als Distanzscheibe kann eine Unterlegscheibe verwendet werden. Die Distanzscheibe kann als Distanzfalz aus z. B. Hartkunststoff ausgestaltet sein.

Die Distanzscheibe kann auf die zweite Befestigungseinrichtung (im Folgenden beispielhaft als Schraube bezeichnet, ohne die Befestigungseinrichtungen hierauf beschränken zu wollen), lösbar aufgesteckt werden oder mit ihr fest verbunden sein (gelötet, geklebt, als ein Teil hergestellt usw.). Wird die Distanzscheibe aufgesteckt, so kann sie über das Gewinde bis zum Schraubenkopf vorgeschoben werden. Wird die Schraube anschließend in das erste Werkstück eingeschraubt, so ist die Eindringtiefe durch die Distanzscheibe begrenzt.

In weiteren Ausführungsformen kann mittels der Distanzscheibe vorteilhaft ein Abstand zwischen den miteinander zu verbindenden Werkstücken festgelegt werden.

In manchen Ausführungsformen wird oder ist die Hülse der weiten Befestigungseinrichtung derart vollständig in die Nut eingefügt oder eingelassen, dass eine Unterseite der Distanzscheibe, die von der Nut wegzeigt und vorzugsweise parallel zur Oberfläche des ersten Werkstücks, in welche die Nut eingefräst ist, parallel angeordnet ist, entweder bündig der mit der Oberfläche des ersten Werkstücks abschließt oder um einen vorbestimmtes Maß über die Oberfläche vorsteht. Das vorbestimmte Maß kann einen Spalt zwischen beiden Werkstücken bestimmen. Das Maß kann optional Null sein.

Ein Teil der Distanzscheibe (bezogen auf deren Dicke) wird oder ist vorzugsweise in die gefräste Nut aufgenommen. Die Distanzscheibe ist somit vorzugsweise abschnittsweise oder vollständig in die Nut aufgenommen.

Die Dicke der Distanzscheibe kann anschließend vollständig, teilweise oder überhaupt nicht in die Nut formschlüssig eingefügt werden oder sein.

Wird die Distanzscheibe mit ihrer gesamten Dicke in die Nut eingefügt (bündiger Abschluss der Stirnfläche des ersten Werkstücks mit der Unterseite der Distanzscheibe), so resultiert daraus kein Spalt zwischen den beiden zu verbindenden Werkstücken.

Wird die Distanzscheibe teilweise, beispielweise zu einem Drittel der Dicke, formschlüssig in die erste Befestigungseinrichtung eingefügt, kragen zwei Drittel der Dicke der Distanzscheibe aus der Abschlussfläche Fachboden/erste Befestigungseinrichtung heraus. Diese Dicke von zwei Drittel der Distanzscheibendicke kann dem Spalt zwischen den beiden Werkstücken entsprechen. Dabei wird eine planparallele Oberfläche der Trägerstruktur vorausgesetzt. Ein solcher Spalt kann vorteilhaft eine Schonung von Material oder Oberflächenbeschichtung (wie Farbe oder Lack oder dergleichen) von z. B. Fachboden und/oder Trägerstruktur bewirken.

In einer weiteren erfindungsgemäßen Ausführungsform weist die Nut einen über ihre, in ihrem Gebrauch funktionell genutzte oder nutzbare, Länge und/oder über ihre Gesamtlänge konstanten Querschnitt und/oder konstantes Profil auf.

In manchen erfindungsgemäßen Ausführungsformen weist das zweite Schnittprofil ein Querschnittprofil in Trapezform auf oder besteht hieraus.

In einigen erfindungsgemäßen Ausführungsformen ist die zweite Befestigungseinrichtung aus Kunststoff hergestellt oder weist einen solchen auf.

In manchen erfindungsgemäßen Ausführungsformen weist die zweite Befestigungseinrichtung wenigstens eine Distanzscheibe auf, welche eine Tiefe, mit welcher die Befestigungseinrichtung in ihrem Gebrauch z. B. in die Trägerstruktur oder den Fachboden einbringbar ist, beschränkt. In gewissen erfindungsgemäßen Ausführungsformen weist die Nut einen über ihre Länge konstanten Querschnitt auf, in anderen nicht.

In bestimmten erfindungsgemäßen Ausführungsformen ist die Hülse aus einem anderen - insbesondere weicheren, verformbareren oder nachgiebigeren - Material als die Schraube der zweiten Befestigungseinrichtung ausgestaltet.

In bestimmten erfindungsgemäßen Ausführungsformen ist die Hülse ein ganz oder teilweise rotationssymmetrischer Körper, welcher einen kegelartigen Abschnitt aufweist, dessen Flanken im Gebrauchszustand an Flanken eines kegelartigen Abschnitts der zweiten Befestigungseinrichtung anliegen.

Hierzu können die Flanken der Hülse und die Flanken der zweiten Befestigungseinrichtung parallel zueinander stehen und/oder gleiche Neigung zu einer Drehachse des rotationssymmetrischen Abschnitts der Hülse haben und/oder großflächig aneinander anliegen.

In manchen erfindungsgemäßen Ausführungsformen ist die Hülse aus Polyoxymethylen (POM) oder weist dieses Material auf.

Die Hülse ist vorzugsweise mittels Spritzguss erzeugt.

In einigen Ausführungsformen umfasst das erfindungsgemäße System ergänzend eine Schablone. Diese dient dazu, auf ein erstes Werkstück aufgelegt zu werden, und um den Fräser entlang der Schablone oder in, von der Schablone vorgegebenen, Schablonenaussparungen zu bewegen unter Erzeugen oder Fräsen der Nut.

In manchen Ausführungsformen umfasst das System mehrere Schrauben unterschiedlicher Längen. Jede von ihnen ist vorgesehen, bei Bedarf zum Erhalten der zweiten Befestigungseinrichtung durch die Hülse hindurchgeführt zu werden. Die Schraube kann dabei zumeist durch die Hülsenöffnung hindurch geschoben werden, bis der Kopf der Schraube im Inneren der Hülse gegen eine Verengung stößt, durch welche der Kopf nicht passt, der Schaft hingegen schon.

In einigen Ausführungsformen des Systems gibt die Schablone wenigstens eine Fräsform oder einen Fräsweg vor oder begrenzt eine(n) solche(n), etwa mittels Schablonenaussparungen. Die Fräsform oder der Fräsweg oder die Schablonenaussparung ist in diesen Ausführungsformen entlang ihres/seines gesamten Umfangs von Schablonenmaterial umgeben.

In manchen Ausführungsformen weist der Fräser des Systems wenigstens eine stirnseitige Schneide auf. Sie kann den Fräser axial begrenzen oder abschließen. Sie kann beispielsweise einen Durchmesser zwischen 6 mm und 10 mm, z. B. einen Durchmesser von 8 mm, aufweisen.

In einigen Ausführungsformen weist der Fräser wenigstens zwei sich senkrecht zu einer Längsachse des Fräsers erstreckende Schneiden auf. Diese können exemplarisch eine Breite zwischen 1 mm und 2 mm, beispielsweise eine Breite von 1,5 mm, weniger breit oder breiter, aufweisen.

In manchen Ausführungsformen weist der Fräser wenigstens eine sich parallel zur Längsachse des Fräsers erstreckende Schneide auf. Sie kann umlaufend ausgestaltet sein, z. B. in zylindrischer Form. Sie kann exemplarisch eine Höhe (in Längsrichtung des Fräsers) zwischen 3 mm und 7 mm, z. B. von 5 mm, aufweisen.

In einigen Ausführungsformen des erfindungsgemäßen Möbelsystems ist die erste Befestigungseinrichtung bzw. die Nut mittels des Fräsers des erfindungsgemäßen Systems gefräst.

In manchen Ausführungsformen des Möbelsystems ist die Hülse, durch welche eine Schraube hindurchgeführt ist, zumindest abschnittsweise in die Nut eingeschoben.

In einigen Ausführungsformen umfasst das erfindungsgemäße Verfahren als weiteren Schritt ein Fräsen eines Fräswegs mittels des Fräsers, insbesondere im ersten Werkstück. Der Fräsweg weist einen Anfang und ein Ende auf, welche zwischen sich eine Nut erzeugen bzw. definieren. Der Fräsweg liegt in einer Ebene des ersten Werkstücks. Der Fräser tritt hierbei am Anfang in das erste Werkstück ein und am Ende wieder aus dem ersten Werkstück aus.

In manchen Ausführungsformen umfasst das erfindungsgemäße Verfahren als weiteren Schritt ein Fräsen eines Fräswegs mittels des Fräsers, wobei der Fräsweg einen Anfang aufweist, kein Ende. In diesen Ausführungsformen wird der Fräser entlang der Nut wieder zum Anfang zurückgeführt und verlässt die Nut wieder durch diesen Anfang bzw. dessen Verbreiterung.

Dabei kann vorteilhaft eine einzige Größe jeweils der ersten und/oder der zweiten Befestigungseinrichtung für eine Vielzahl unterschiedlicher Dicken oder Geometrien der Werkstücke verwendet werden. Zudem kann diese Ausgestaltung in manchen Ausführungsformen erlauben, die entsprechende Befestigungseinrichtung (in einem Gebrauchszustand oder in einem Verbindungszustand zwischen den Werkstücken) auch für Blick von unten oder oben auf die Werkstücke unsichtbar werden zu lassen. Letzteres kann einer ansprechenden Optik dienen.

Mittels der vorliegenden Erfindung kann mittels des Kraft- und/oder Formschlusses vorteilhaft ein selbsttragendes Möbelsystem, insbesondere Regalsystem, welches nur Fachböden und Trägerstrukturen, nicht aber weitere Verbindungseinrichtungen zwischen benachbarten oder weiteren Trägerstrukturen aufweist, bereitgestellt werden.

Die Nut ist in manchen Ausführungsformen weniger als 10 mm tief, besonders bevorzugt weniger als 8 mm tief. Tiefere Nuten als hier genannt erschweren ihre Fertigung, insbesondere hinsichtlich der Fräspräzision.

Entsprechend ist die Hülse ohne Distanzscheibe vorzugsweise nicht mehr als 7 mm, vorzugsweise nicht mehr als 6 mm hoch.

In einigen Ausführungsformen ist die zweite Befestigungseinrichtung nicht in oder mit dem zweiten Werkstück verklebt. Ein Lösen der zweiten Befestigungseinrichtung vom zweiten Werkstück, etwa durch Herausschrauben und erneutem Verbinden der zweiten Befestigungseinrichtung mit dem zweiten Werkstück, etwa an anderer Stelle, oder mit einem weiteren Werkstück, ist somit vorteilhaft möglich.

In manchen Ausführungsformen erstreckt sich die Nut über die gesamte Länge und/oder Breite des ersten Werkstücks.

In einigen Ausführungsformen weist die Nut keine dreieckige Form bei Betrachtung von oben, oder mit Blick aus der von der Nut aufgespannten Ebene heraus, oder mit Blick auf die gefräste Fläche, auf, in anderen hingegen schon.

Eine dreieckige Form kann durch sich entlang des Fräswegs verengende Nutabschnitte erzeugt werden oder erzeugt worden sein.

Manche oder alle erfindungsgemäßen Ausführungsformen können einen, mehrere oder alle der vorstehend und/oder im Folgenden genannten Vorteile aufweisen.

Das Möbelsystem kann dank des erfindungsgemäßen Befestigungssystems vorteilhaft selbst aussteifend sein.

Eine - aus statischen Gründen in Lösungen des Standes der Technik erforderliche - Möbelrückwand, z. B. Regalrückwand, kann beim erfindungsgemäßen Möbelsystem vorteilhaft entfallen, ebenso weitere Versteifungselemente, welche mittels Werkzeug befestigt werden müssten. Das erfindungsgemäß vorgeschlagene Befestigungssystem kann die gewünschte Stabilisierung bewirken. Dazu benötigt es zu seiner Herstellung ungleich weniger Material als eine Rückwand, es muss nicht die gesamte Rückwand bedeckt werden. Zudem lässt es hierdurch zu, dass durch den größten Anteil der Rückfläche mangels Rückwand hindurchgesehen werden kann. Letzteres ist bei Raumteilern, die ein gewisses Maß an Licht durchlassen sollen, von großem Vorteil. Zu seiner Befestigung bedarf das Befestigungssystem nach Fräsen der Nut und Einschrauben der zweiten Befestigungseinrichtung keiner Werkzeuge oder Beschläge mehr.

In manchen Ausführungsformen ist das zweite Werkstück ein Möbelaccessoire oder ein additives Element, etwa eine Lampe, Leselampe, Aufhänger, Schlüsselbrett, Schlüsselhaken, usw.

In einigen Ausführungsformen ist die zweite Befestigungseinrichtung ein Teil eines Möbelaccessoires oder eines additives Elements, etwa einer Lampe, Leselampe, eines Aufhängers, Schlüsselbretts, Schlüsselhakens, usw.

In manchen Ausführungsformen sind in die Nut mehr als eine zweite Befestigungseinrichtung eingeschoben, beispielsweise zwei zweite Befestigungseinrichtungen. Hierbei kann eine zweite Befestigungseinrichtung mit einem zweiten Werkstück im Sinne eines Möbelelements verbunden sein, während die andere zweite Befestigungseinrichtung Teil eines Möbelaccessoires oder eines additiven Elements, etwa einer Lampe, Leselampe, eines Aufhängers, Schlüsselbretts, Schlüsselhakens, usw. sein kann.

In einigen Ausführungsformen umfasst das Schnittprofil genau einen Hinterschnitt oder genau eine Engstelle, nicht zwei oder mehr.

In dem erfindungsgemäßen Möbelsystem kann das Befestigungssystem vorteilhaft für einen Betrachter optisch verborgen sein.

Aus der Praxis sind Regalsysteme mit Fachböden bekannt. Letztere sind dabei mittels verschiedener Befestigungs- oder Verbindungssysteme an Seitenwänden oder anderen Trägerstrukturen befestigt. Aus Gründen der Stabilität und zum Erzielen der erforderlichen Steifigkeit dieser Regalsysteme sind häufig Rückwände und/oder Versteifungselemente vorgesehen. Das Vorsehen von Rückwänden ist sowohl materialals auf arbeitsaufwändig und erfordert überdies meist den Einsatz von Werkzeug. Das Vorsehen von Versteifungselementen erfordert - wie das Vorsehen von Rückwänden - Werkzeug und Befestigungssysteme in Form von Beschlägen. Durch Einsatz der vorliegenden Erfindung kann auf derartige Beschläge verzichtet werden.

Weiter kann es ferner weiter vorteilhaft möglich sein, den Arbeits- und/oder Kostenaufwand zur Herstellung der einzelnen Bauteile des Möbelsystems zu reduzieren.

Insbesondere die Nut des erfindungsgemäßen Befestigungssystems kann einfach, wirtschaftlich, komplett unsichtbar erstellt werden. Sie bedarf ferner keiner zusätzlichen Einrichtungen, wie in sie eingesetzte Schienen, Schrauben zum Befestigen solcher Schienen in der Nut, usw.

Aufgrund der besonderen Ausgestaltung des Fräsers kann dieser senkrecht auf das unbearbeitete Werkstück aufgesetzt werden. Seine optionalen stirnseitigen Schneiden erlaubt es, ohne Vorbohren usw. bereits unter Verwendung des Fräsers die gewünschte Nut zu fertigen.

Nuten können somit inmitten des Werkstücks beginnend gefräst werden, sie müssen nicht bereits am Rand oder unter Einbezug einer Seitenfläche des Werkstücks begonnen werden.

Ist das Profil als Schwalbenschwanz oder Trapez ausgeführt, liegen nur zwei Seitenflächen der Hülse an Seitenflächen der Nut an, was die Reibung beim Schieben der ersten Befestigungseinrichtung entlang der zweiten Befestigungseinrichtung vorzugsweise gering hält.

Zudem erlaubt der Schwalbenschwanz eine vergleichsweise geringe Nuttiefe, was es ermöglich, die Nut mit einem relativ zu seiner Länge vergleichsweise dicken Fräser zu fertigen, wodurch die Anforderungen an eine präzise Fertigung der Nut vergleichsweise einfach erfüllt werden können und zudem einen längeren Fräsweg erlaubt, ohne dass z. B. die seitlichen Nutflanken instabil werden würden.

Im Folgenden wird die vorliegende Erfindung beispielhaft unter Bezugnahme auf die beigefügte Zeichnung beschrieben. In der Zeichnung bezeichnen gleiche Bezugszeichen gleiche oder identische Bauteile bzw. Komponenten. Es gilt:
- **Fig. 1**: zeigt schematisch vereinfacht eine zweite Befestigungseinrichtung in bzw. an einer Trägerstruktur in einem Vertikalschnitt;
- **Fig. 2**: zeigt schematisch vereinfacht eine erste Ausführungsform des erfindungsgemäßen Befestigungssystems in einem Möbelsystem mit zwei Werkstücken, hier exemplarisch mit einem Fachboden und einer Trägerstruktur;
- **Fig. 3**: zeigt in Seitenansicht die erste Befestigungseinrichtung gemäß einer Ausführungsform;
- **Fig. 4**: zeigt eine zweite Ausführungsform des erfindungsgemäßen Befestigungssystems in einem Möbelsystem mit zwei Werkstücken;
- **Fig. 5**: zeigt eine Hülse, welche auch in Fig. 4 gezeigt ist, in perspektivischer Ansicht; und
- **Fig. 6**: zeigt einen Fräser des erfindungsgemäßen Systems, gemeinsam mit einer Hülse des Systems;
- **Fig. 7**: zeigt einen Ausschnitt aus Fig. 6, vergrößert und als Schnittdarstellung;
- **Fig. 8**: zeigt ein erstes Werkstück eines erfindungsgemäßen Möbelsystems mit einer Nut in einer ersten Fräsform oder mit einem ersten Fräsweg;
- **Fig. 9a**: zeigt das erste Werkstück der Fig. 8 mit der gefrästen Nut;
- **Fig. 9b**: zeigt das erste Werkstück der Fig. 8 mit der gefrästen Nut in anderer Darstellung;
- **Fig. 10**: zeigt einen von jedem in Fig. 8 gezeigten Fräsweg abweichenden Fräsweg;
- **Fig. 11**: zeigt eine Schablone eines erfindungsgemäßen Systems mit einer Vielzahl von Führungen zum Fräsen verschiedener Fräsformen/Fräswegen;
- **Fig.12**: zeigt einen Längsschnitt durch eine erste Befestigungseinrichtung, eine gefräste Nut entsprechend der Ausführungsform der Fig. 9a; und
- **Fig.13**: zeigt einen Längsschnitt durch eine erste Befestigungseinrichtung, eine gefräste Nut in einer weiteren Ausführungsform.

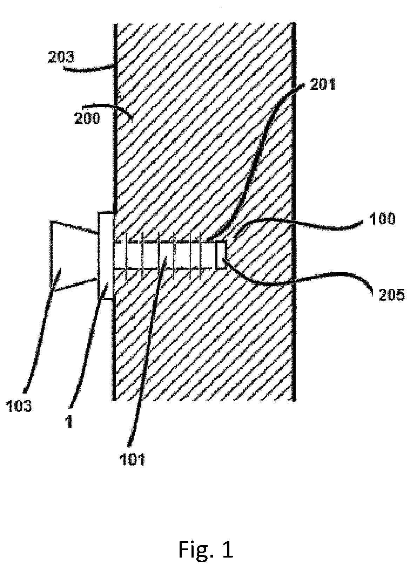

**Fig.** 1 zeigt in einem Vertikalschnitt eine zweite Befestigungseinrichtung 100, die in bzw. an einer Trägerstruktur 200, als Beispiel eines zweiten Werkstücks, angeordnet ist.

Die zweite Befestigungseinrichtung 100 ist, wie in Fig. 1 gezeigt, als Schraube ausgestaltet. Die Trägerstruktur 200 kann eine Seitenwand, z. B. eines Regals, sein.

Die Trägerstruktur 200 weist eine Aufnahme 201 zum Aufnehmen der zweiten Befestigungseinrichtung 100 bzw. eines Schafts 101 derselben auf.

Als Teil der Befestigungseinrichtung 100 ist, wie in Fig. 1 gezeigt, eine Distanzscheibe 1 vorgesehen.

Die Distanzscheibe 1 kann ein Distanzfalz aus Hartkunststoff sein.

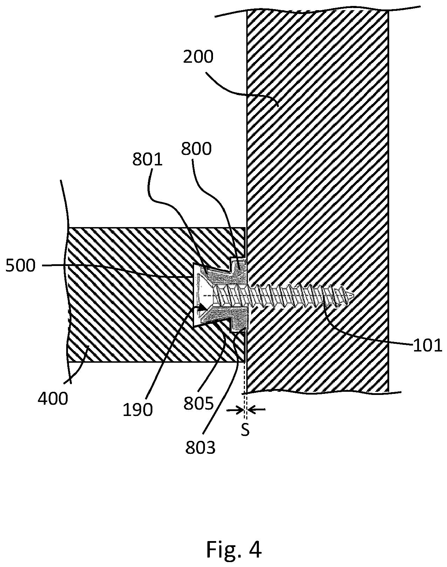

Die Distanzscheibe 1 kann integral an der zweiten Befestigungseinrichtung 100 ausgestaltet sein, etwa als Teil der nachfolgend erläuterten Hülse 800 (siehe Fig. 4), oder als einzelnes Bauteil vorliegen. Die Distanzscheibe 1 kann während des Befestigens (z. B. im vorliegenden Fall Einschraubens) der zweiten Befestigungseinrichtung 100 an der Trägerstruktur 200 zwischen einem Kopf 103 der zweiten Befestigungseinrichtung 100 und der Trägerstruktur 200 fixiert werden.

Mittels der Distanzscheibe 1 ist der Kopf 103 der zweiten Befestigungseinrichtung 100 von einer Oberfläche 203 der Trägerstruktur 200 beabstandet, so dass die zweite Befestigungseinrichtung 100 nicht vollständig in die Aufnahme 201 der Trägerstruktur 200 eingebracht und ein Freiraum 205 in der Aufnahme 201 bestehen bleibt. Die Aufnahme 201 (Bohrung) kann daher vorteilhaft auf einfache Weise hergestellt werden. Eine Tiefe der Aufnahme 201 muss für einen korrekten Sitz der zweiten Befestigungseinrichtung 100 in der Trägerstruktur 200, vor allem was eine Einschraubtiefe betrifft, nicht eingehalten werden. Die Distanzscheibe 1 beschränkt, wie in Fig. 1 gezeigt, eine Tiefe, mit welcher die zweite Befestigungseinrichtung 100 in die Trägerstruktur 200 einbringbar ist.

Mittels der Distanzscheibe 1 ist ferner die Stirnseite des Fachbodens von einer Oberfläche 203 der Trägerstruktur 200 beabstandet, so dass eine unerwünschte Berührung des Fachbodens mit der Trägerstruktur vermieden wird.

Der Kopf 103 der zweiten Befestigungseinrichtung 100 kann z. B. kegel- oder kegelstumpfförmig ausgestaltet sein.

Kopf 103 und Distanzscheibe 1 sind in einigen Ausführungsformen Teil der zu nachfolgenden Figuren beschriebenen Hülse 800.

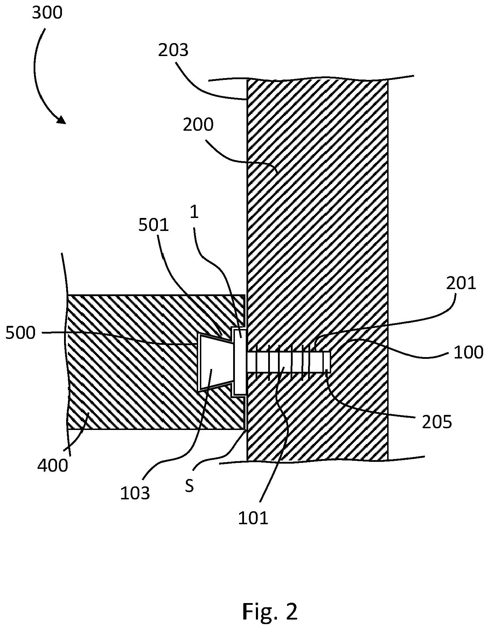

**Fig. 2** zeigt eine erste Anordnung des Befestigungssystems 300, einen Fachboden 400, als Beispiel eines ersten Werkstücks, und eine Trägerstruktur 200 als Beispiel eines zweiten Werkstücks.

Der Fachboden 400 kann ein Regalboden oder anderes Werkstück oder Möbelteil aus Holz, Kunststoff und dergleichen sein.

Eine erste Befestigungseinrichtung 500 ist in den Figuren eine Nut mit einem hierin offenbarten ersten oder zweiten Schnittprofil.

Wie in Fig. 2 gezeigt, ist die erste Befestigungseinrichtung 500 des Befestigungssystems 300 in einen Teil des Fachbodens 400 eingefräst.

Die erste Befestigungseinrichtung 500 weist eine Öffnung 501 in Form einer Nut, hier als eine so genannte Schwalbenschwanznut ausgestaltet, auf. Diese Öffnung 501 entspricht im Beispiel der Figuren dem ersten

Querschnittprofil. Die Form und die Abmessungen des ersten Querschnittprofils der ersten Befestigungseinrichtung 500 sind bevorzugt ausgestaltet, um die zweite Befestigungseinrichtung 100 bzw. den Kopf 103 derselben, bei welchem es sich hier exemplarisch um das zweite Querschnittprofil handelt, form- und/oder kraftschlüssig aufzunehmen. Die erste Befestigungseinrichtung 500 kann die zweite Befestigungseinrichtung 100 bzw. einen Kopf 103 derselben umgreifen.

Die Form der Öffnung 501 der ersten Befestigungseinrichtung 500 ist erkennbar komplementär zur Form des Kopfes 103 der zweiten Befestigungseinrichtung 100 ausgestaltet, wie dies in Fig. 2 klar erkennbar ist.

Die Aufnahme der zweiten Befestigungseinrichtung 100 bzw. des Kopfes 103 derselben kann, wie in Fig. 2 veranschaulicht, nach Art eines Schlüssel-Schloss-Prinzips vorgesehen sein. Die Aufnahme kann passgenau erfolgen. Sie kann völlig oder nahezu spielfrei sein.

Wie in Fig. 2 gezeigt ist, berührt der Fachboden 400 infolge der Distanzscheibe 1 vorzugsweise nicht die Trägerstruktur 200. Durch die vorgesehene Beabstandung der zweiten Befestigungseinrichtung 100 verbleibt optional ein Spalt S zwischen der Oberfläche 203 der Trägerstruktur 200 und dem Fachboden 400.

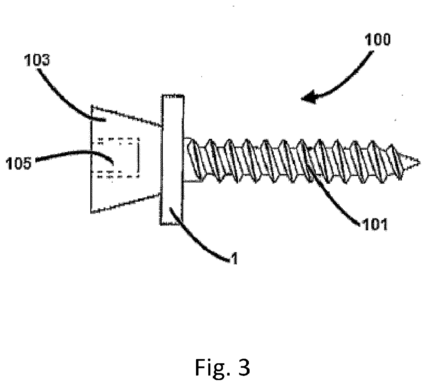

**Fig. 3** zeigt in Seitenansicht die zweite Befestigungseinrichtung 100 gemäß einer Ausführungsform der vorliegenden Erfindung.

Die zweite Befestigungseinrichtung 100 ist als Schraube dargestellt.

Die zweite Befestigungseinrichtung 100 weist am Schaft 101 ein Gewinde auf. Die zweite Befestigungseinrichtung 100 weist ferner den Kopf 103 auf. Der Kopf 103 kann, wie hier gezeigt, trapezförmig ausgestaltet sein.

Die Distanzscheibe 1 ist, wie in Fig. 3 gezeigt, einstückig mit oder als integraler Teil von der Befestigungseinrichtung 100 hergestellt.

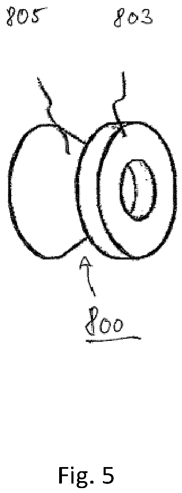

Wie mittels des gestrichelten Profils 105 im Kopf 103 der zweiten Befestigungseinrichtung 100 angedeutet ist, weist die zweite Befestigungseinrichtung 100 bevorzugt ein Oberflächenprofil auf, welches ein vorteilhafterweise leichtes Einbringen bzw. Befestigen der zweiten Befestigungseinrichtung 100 an der Trägerstruktur (in Fig. 5 nicht gezeigt), z. B. das Einschrauben mit Hilfe eines Schraubenziehers, eines geeigneten Bits oder dergleichen, zulässt.

Das Profil 105 der Schraube kann ein Sechskantinnenprofil aufweisen zum Eindrehen mittels Inbusschlüssel (nicht gezeigt).

**Fig. 4** zeigt eine Verbindung von einer ersten Befestigungseinrichtung 500, eingebracht in einen Fachboden 400, mit einer zweiten Befestigungseinrichtung 100, eingeschraubt in eine Trägerstruktur 200 für den Fachboden 400.

Als Teil der zweiten Befestigungseinrichtung 100 ist eine Hülse 800 zu erkennen. Diese hat eine innenliegende Durchgangsöffnung, durch welche die Schraube der zweiten Befestigungseinrichtung 100 hindurchgeschoben ist.

Flanken 801 der Hülse 800 begrenzen als umlaufende Fläche einen kegeligen Abschnitt der Hülse 800.

Gegen die Flanken 801 drücken in diesem Ausführungsbeispiel Flanken 190 des Schraubenkopfs 103 der in die Trägerstruktur 200 eingeschraubten zweiten Befestigungseinrichtung 100. Durch das Anziehen der zweiten Befestigungseinrichtung 100 mittels Schraubendreher kann somit die Reibung oder Pressung zwischen den Flanken 801 und 190 erhöht werden, durch ein Lockern der Schraubverbindung kann die Reibung oder Pressung herabgesetzt werden. Durch ein festeres Eindrehen der zweiten Befestigungseinrichtung 100 wird automatisch mehr Druck auf den Hülsenkörper aufgebracht. Auf diese Weise ist eine Sicherung des Fachbodens 400 in oder an der Trägerstruktur 200 auf einfache Weise vorteilhaft erzielbar. Sicherungsstifte oder andere Maßnahmen gegen ein ungewolltes Herausrutschen des Fachbodens oder zum Festlegen einer Endstellung des Fachbodens 400 sind somit nicht erforderlich. Dabei ist die Reibung oder Pressung vorteilhaft für jede Hülse 800 einzeln einstellbar. Beispielsweise kann eine in Einschieberichtung weiter hinten gelegene Hülse 800 einfach etwas stärker angezogen werden als eine weiter vorne liegende Hülse 800.

Gut erkennbar ist in Fig. 4, dass die Hülse 800 optional mit einem Abschnitt 803 über eine Stirnfläche des Fachbodens 400 übersteht. Hierdurch bleibt ein Spalt S zwischen Fachboden 400 und Trägerstruktur 200 erhalten. Die Wirkung der oben zu anderen Ausführungsformen diskutierten Distanzscheibe 1 wird durch den Abschnitt 803 der Hülse 800 übernommen.

Äußere Flanken 805 der Hülse 800 werden bei stärkerem Einschrauben der zweiten Befestigungseinrichtung 100 gegen entsprechende Abschnitte der ersten Befestigungseinrichtung 500 gepresst.

Beim Anspannen der zweiten Befestigungseinrichtung 100 mittels des Schraubendrehers kann sich die Hülse 800 aufgrund ihres Materials in manchen erfindungsgemäßen Ausführungsformen leicht oder in beschränktem Umfang verformen. Hierdurch ist es vorteilhaft möglich, einen optimalen Reibschluss oder eine optimale Pressung zu erzielen.

**Fig. 5** zeigt die Hülse 800 der Fig. 4 in perspektivischer Ansicht.

Die äußeren Flanken 805 der Hülse 800 sowie der Abschnitt 803, welcher in dieser Ausführungsform beispielhaft die Funktion der Distanzscheibe 1, wie oben ausgeführt, haben kann, sind in der Darstellung der Fig. 5 gut zu erkennen.

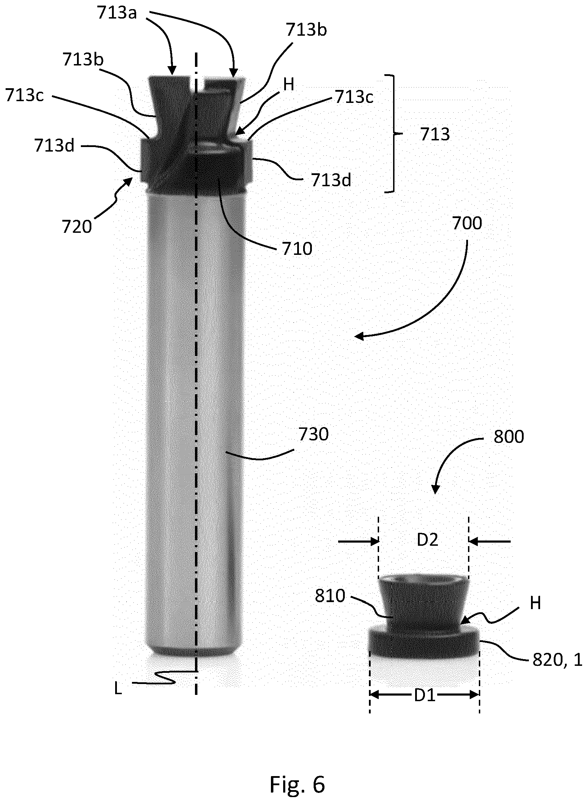

**Fig. 6** zeigt einen Fräser 700 des erfindungsgemäßen Systems, neben einer Hülse 800 des Systems.

Zu erkennen ist, dass hier wie in manchen anderen Ausführungsformen sowohl der Fräser 700 als auch die Hülse 800 jeweils stirnseitig hin mit einem Schwalbenschwanzprofil abschließen oder, allgemeiner, in einem stirnseitigen oder freien Endabschnitt ein Schwalbenschwanzprofil aufweisen.

Das Schwalbenschwanzprofil ist, bezogen auf die Längsrichtung von Fräser 700 oder Hülse 800 durch genau eine Hinterschneidung H oder genau einen kleinsten Durchmesser oder Umfang definiert. Dieser kann beispielsweise 6 mm betragen. Durch das Vorsehen genau einer solchen Hinterschneidung H können die Reibungskräfte beim Entlanggleiten von erster und zweiter Befestigungseinrichtung 100, 500 relativ zueinander vergleichsweise gering gehalten werden. Dies kann erlauben, die Nut mit geringerer Präzision zu fertigen, die Anpresskräfte exakter vorherzubestimmen und/oder die Nut länger auszugestalten.

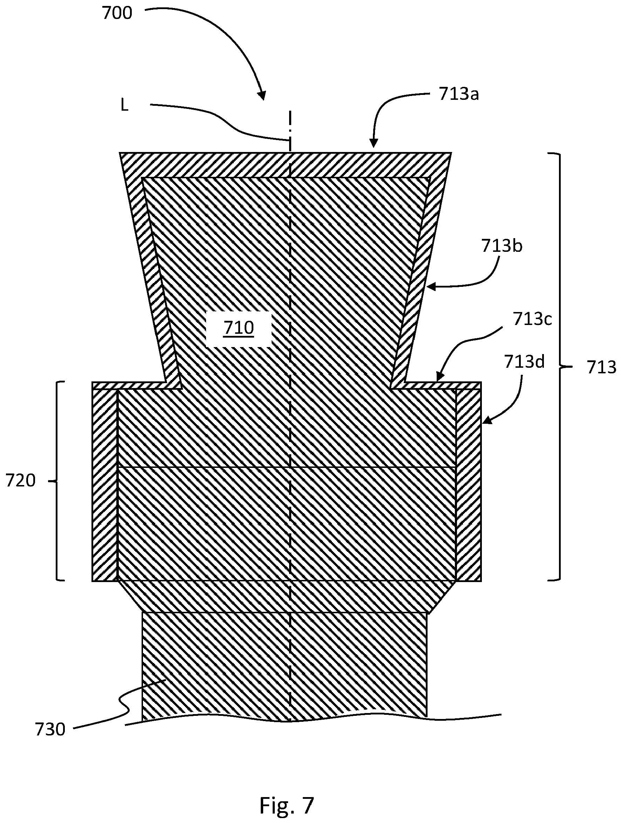

Der Fräser 700 weist eine zu Fig. 7 detaillierter erläuterte Schneideeinrichtung 713 mit Scheiden 713a, 713b, 713c und 713d auf. Die Schneideeinrichtung 713 sitzt auf einem Kern 710, auf welchen ebenfalls in der Beschreibung zu Fig. 7 detaillierter eingegangen wird.

Die Schneide 713d ist Teil eines zylindrischen, fräsenden Abschnitts 720 des Fräsers 700, oder bildet diesen, welcher im Beispiel der Fig. 6 den breitesten Abschnitt des den schneidenden oder fräsenden Abschnitts des Fräsers 700 ausmacht. Dieser Abschnitt kann beispielsweise einen Durchmesser von 9 mm aufweisen.

Der zylindrische, fräsende Abschnitt 720, welcher den schneidenden oder fräsenden Abschnitt des Fräsers 700 in Richtung weg vom freien Ende (das freie Ende des Fräsers 700 oder auch der Hülse 800 ist in Fig. 6 oben oder zeigt nach oben), in Richtung zu einem Einspannabschnitt 730, abschließt, ist somit breiter (z. B. in einem Längsschnitt, wie er in Fig. 7 gezeigt ist) als andere Abschnitte der Schneideeinrichtung, und er ist breiter als die den Fräser 700 stirnseitig abschließenden Schneiden 713a. Die stirnseitig abschließenden Schneiden 713a können beispielsweise einen Durchmesser von 8 mm aufweisen.

Der Einspannabschnitt 730 dient zum Einspannen des Fräsers 700, beispielsweise in eine Werkzeugmaschine.

Zwischen den Schneiden 713a und dem Abschnitt 720 ist im vorliegenden Beispiel genau eine Hinterschneidung H oder ein Abschnitt von - lokal oder insgesamt geringstem Durchmesser oder Umfang, wenigstens bezogen auf die Schneideeinrichtung 713 vorgesehen.

Eine Hinterschneidung H ist hier als ein Abschnitt entlang der Längsachse L der Schneideeinrichtung 713 zu verstehen, welcher sowohl gemessen an seinem weiter zum freien Ende hin als auch zum Einspannabschnitt 730 hin jeweils benachbart gelegenen Querschnitt der Schneideeinrichtung 713 kleiner oder geringer ist, beispielweise 6 mm misst.

Die Hülse 800 weist einen sich zylindrisch nach unten (bezogen auf Fig. 6) verjüngenden Keilabschnitt 810 auf, welcher nach einer Hinterschneidung H in einen zylindrischen Abschnitt 820 übergeht, welcher der Distanzscheibe 1 entspricht.

Zu erkennen ist, dass der stirnseitig abschließende Durchmesser D2 schmäler sein kann als der Durchmesser D1 des zylindrischen Abschnitts 820 oder der Distanzscheibe 1.

**Fig. 7** zeigt einen Ausschnitt aus Fig. 6, vergrößert und als Schnittdarstellung, des stirnseitigen Endes oder freien Endes des Fräsers 700 der Fig. 6.

Der Fräser 700 weist eine Schneideeinrichtung 713 mit Schneiden 713a, 713b, 713c und 713d auf.

Die Schneiden 713a, 713b, 713c und 713d sitzen jeweils auf einem Kern 710 des Fräsers 700 auf oder begrenzen ihn nach radial oder axial. Der Kern 710 des Fräsers 700 kann teilweise hohl oder insgesamt massiv sein.

Die Schneiden 713a, 713b, 713c und 713d können optional jeweils aneinander angrenzend oder ineinander übergehend vorgesehen sein.

Optional gilt: Wenigstens eine der Schneiden 713a, 713b, 713c und 713d, hier exemplarisch die Schneide 713d, schließt je einen Abschnitt des Fräsers 700 nach axial und/oder ausschließlich nach axial ab (zumindest bezogen auf die Fräswirkung der jeweiligen Schneide).

Optional gilt: Wenigstens eine der Schneiden 713a, 713b, 713c und 713d, hier exemplarisch die Schneiden 713a und 713c, verläuft senkrecht zu einer Längsachse L des Fräsers 700.

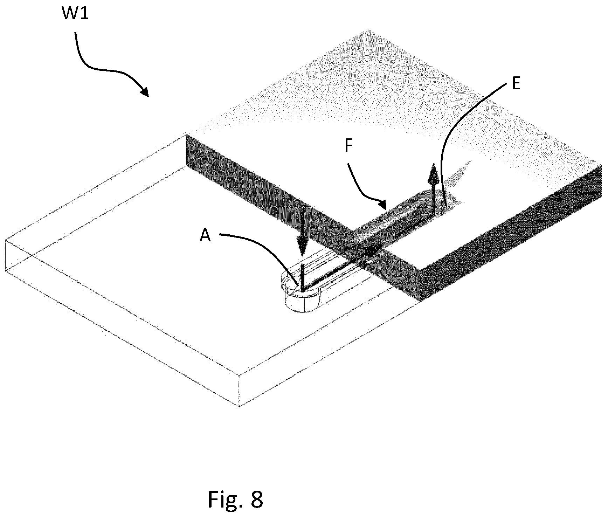

**Fig. 8** zeigt ein erstes Werkstück W1 mit Nut als erster Befestigungseinrichtung 500. Die Nut verläuft entlang eines Fräswegs F, welcher hier rein exemplarisch gerade, also nicht gekrümmt oder gebogen verläuft, und einen Anfang A und ein Ende E aufweist.

Der Fräsweg F liegt in einer Ebene des ersten Werkstücks W1, und weder sein Anfang A noch sein Ende E ist Teil eines Randes des ersten Werkstücks W1 in dieser Ebene. Vielmehr ist die Nut gefräst worden, indem der Fräser 700 in einem mittleren Bereich auf die Oberfläche des ersten Werkstücks W1 aufgesetzt, in das Werkstück W1 senkrecht hineingefräst wurde, dann von diesem Anfang A in Pfeilrichtung in Fig. 8 nach rechts geführt wurde, und anschließend nach Erreichen des Endes E des Fräswegs F wieder senkrecht nach oben aus dem ersten Werkstück W1 herausgeführt wurde. Sowohl der Anfang A des Fräswegs F als auch das Ende E des Fräswegs F weisen aufgrund der Geometrie des Fräsers 700 kein Schwalbenschwanzprofil mehr auf, der zwischen Anfang A und Ende E liegende Abschnitt des Fräswegs F hingegen schon.

Eine zweite Befestigungseinrichtung 100 mit einer Hülse 800 kann somit in den Anfang A oder in das Ende E des Fräswegs F senkrecht eingesetzt werden und/oder dort aus der Nut wieder senkrecht herausgezogen werden.

Um die zweite Befestigungseinrichtung 100 bzw. die Hülse 800 nach ihrem Einsetzen im Bereich des Anfangs A in die Nut und nach ihrem Verschieben entlang der Nut nicht versehentlich wieder aus dem Eingriff der formschlüssigen Profile zu lösen, indem die Hülse 800 ungewollt aus der Nut im Bereich des Endes E herausgezogen wird, kann in das Ende E ein nicht gezeigter Stopfen eingeführt werden, welcher das Eintreten der entlang der Nut in Richtung des Endes E geführten Hülse 800 in das Ende E hinein verhindert. Alternativ kann der Fräser 700, wenn er am Ende E angelangt ist, wieder entlang des Fräswegs F zum Anfang A zurückgeführt werden und dort, nämlich am Anfang A, z. B. senkrecht, wieder aus dem ersten Werkstück W1 herausgeführt werden.

Andere Ausführungsformen, bei welchen der Fräsweg F nicht gerade verläuft sondern einen gekrümmten Verlauf hat, etwa schlangenlinienförmig, um die Ecke, in Form eines Halbkreises oder in wiederum weiteren Fräsfiguren, sind ebenfalls vorgesehen bzw. möglich.

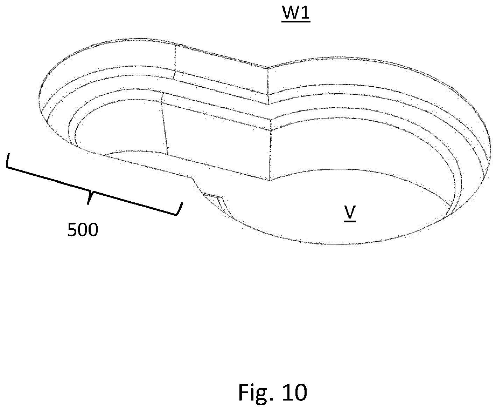

Ausführungsformen, in welchen - anders als in Fig. 8 exemplarisch gezeigt - die Nut an eine, vorzugsweise ebenfalls mittels des Fräsers 700, beispielsweise in einem gemeinsamen Arbeitsschritt, ausgefräste Verbreiterung V des Fräswegs F anschließt, sind ebenfalls von der vorliegenden Erfindung umfasst. Ein Beispiel ist in Fig. 10 gezeigt.

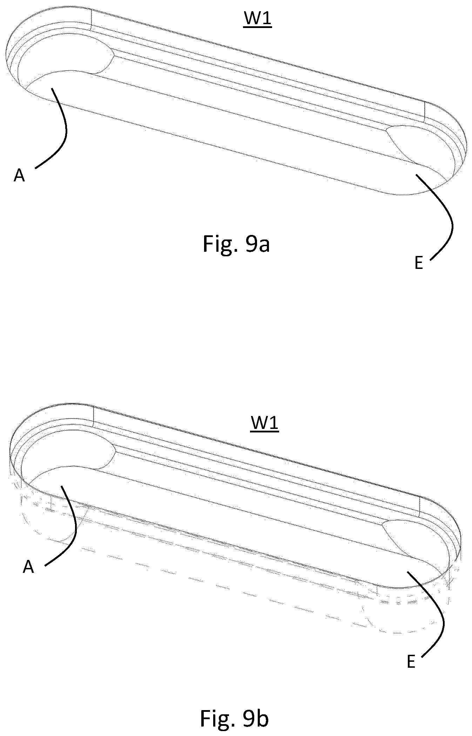

**Fig. 9a** zeigt das erste Werkstück W1 der Fig. 8 mit der gefrästen Nut.

**Fig. 9b** zeigt das erste Werkstück W1 der Fig. 8 mit der gefrästen Nut in anderer Darstellung.

**Fig. 10** zeigt einen von jedem in Fig. 8 gezeigten Fräsweg abweichenden Fräsweg F.

Der Nut, welche über das zur Verbindung mit der Hülse 800 vorgesehene Profil verfügt, schließt sich in der Ebene der Nut eine Verbreiterung V an. Letztere kann ebenfalls gefräst sein, sie kann das Profil des Fräsers 700 an ihren Rändern aufweisen. Sie ist jedoch nicht geeignet, die Hülse 800 formschlüssig aufzunehmen und vor allem zu halten. Zum vereinfachten Einsetzen der Hülse 800 in die erste Befestigungseinrichtung 500 kann die Verbreiterung V jedoch vorteilhaft dienen.

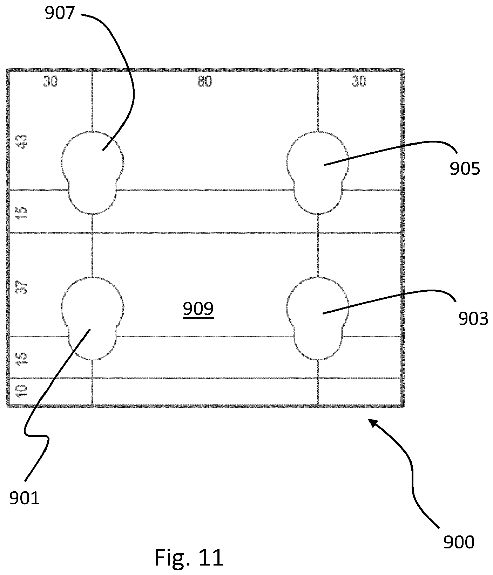

**Fig. 11** zeigt eine Schablone 900 eines erfindungsgemäßen Systems mit einer Vielzahl von Führungen oder Schablonenaussparungen 901, 903, 905, 907, welche beim Fräsen eines ersten Werkstücks W1 mittels des Fräsers 700 als Führung oder Anlage dienen können, wobei die Schablone 900 hierzu auf die Oberfläche des ersten Werkstücks W1 aufgelegt wird.

Die Schablonenaussparungen 901, 903, 905, 907 sind in ein Schablonenmaterial 909 eingearbeitet oder von diesem umgeben. Das Schablonenmaterial 909 ist beispielsweise transparent, es kann aus Plexiglas sein und beispielsweise zwischen 3 mm und 7 mm, z. B. 5 mm, stark oder stärker als dies sein.

Die in Fig. 11 gezeigten Schablonenaussparungen 901, 903, 905, 907 haben in dieser Ausführungsform jeweils identische Formen, in anderen Ausführungsformen ist dies beliebig anders. Die mit ihrer Hilfe gefrästen Fräswege F können sich entsprechend voneinander unterscheiden.

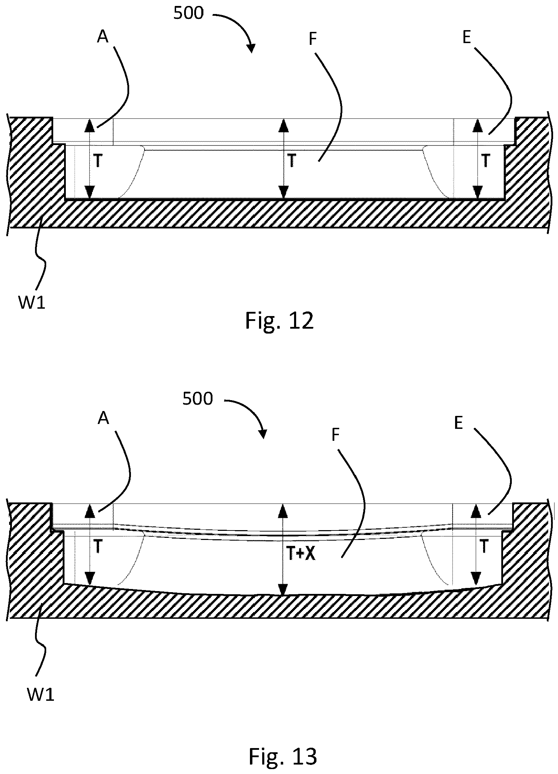

**Fig. 12** zeigt einen Längsschnitt durch eine erste Befestigungseinrichtung 500, eine gefräste Nut entsprechend der Ausführungsform der Fig. 9a.

Die Nut weist einen Anfang A und ein Ende E auf, welche beide mittels des Fräswegs F miteinander verbunden sind. Der Fräsweg F liegt in einer Ebene des ersten Werkstücks W1, wobei weder dessen Anfang A noch dessen Ende E hier exemplarisch Teil eines Randes des ersten Werkstücks W1 ist. Der Fräsweg F hat in Fig. 12 exemplarisch einen geraden Verlauf, er könnte alternativ oder ergänzend gekrümmt sein.

Sowohl der Anfang A des Fräswegs F als auch dessen Ende E weisen aufgrund der Geometrie des Fräsers 700 (in Fig. 12 nicht gezeigt) kein Schwalbenschwanzprofil auf. Der zwischen Anfang A und Ende E liegende Abschnitt des Fräswegs F hingegen schon.

Entlang des Fräswegs F wurde der Fräser 700 parallel zur Oberfläche des erstem Werksstücks W1 geführt, also bei unveränderter Frästiefe. Dies resultiert in einer Nut mit konstanter Nuttiefe T vom Anfang A bis zum Ende E.

**Fig. 13** zeigt einen Längsschnitt durch eine erste Befestigungseinrichtung 500, eine gefräste Nut in einer weiteren Ausführungsform.

Die Nut weist einen Anfang A und ein Ende E auf, welche mittels des Fräswegs F miteinander verbunden sind. Weder der Anfang A noch das Ende E des Fräswegs F ist Teil eines Randes des ersten Werkstücks W1. Der Fräsweg F hat in Fig. 13 exemplarisch einen geraden Verlauf, er könnte alternativ oder ergänzend gekrümmt sein.

Sowohl der Anfang A des Fräswegs F als auch dessen Ende E weisen aufgrund der Geometrie des Fräsers 700 (in Fig. 12 nicht gezeigt) kein Schwalbenschwanzprofil auf. Der zwischen Anfang A und Ende E liegende Abschnitt des Fräswegs F hingegen schon.

Im Gegensatz zu der Ausführungsform der Fig. 12 wurde der Fräser 700 in der beispielhaften Ausgestaltung der Fig. 13 nicht parallel zur Oberfläche des erstem Werksstücks W1 geführt, d. h. die Frästiefe wurde im Verlauf des Fräsvorgangs entlang des Fräswegs F verändert.

Im Beispiel der Fig. 13 wurde der Fräser 700 entlang des Fräswegs F zuerst zunehmend und dann abnehmend tief in das erste Werkstück W1 hinein und dann wieder aus diesem herausgeführt. Die so erzeugte Nut oder ihr Nutgrund verläuft also nicht parallel zur Oberfläche des ersten Werkstücks W1, sondern unter zu- oder abnehmendem Abstand zu Letzterer. Somit entsteht eine Nut, deren Nutgrund segmentbogenförmig bzw. im Längsschnitt konkav oder alternativ konvex verläuft. Am Anfang A und am Ende E des Fräswegs F hat die Nut im Beispiel der Fig. 13 die Nuttiefe T, sie vertieft sich im Verlauf des Fräswegs F auf Nuttiefe T+X, wobei X jede technisch mögliche bzw. technisch sinnvolle Größe haben kann, um sich dann in Richtung zum Ende E wieder auf die Nuttiefe T zu reduzieren. Die Reibung, welche sich zwischen Nut und zweiter Befestigungseinrichtung 100 einstellt, wenn Letztere entlang der Nut (in Fig. 13 von links nach rechts) verschoben wird, nimmt bis etwas zur Mitte der Nut zu, nach der Mitte und bis zum Ende E wieder ab.

In vorstehenden Ausführungen und insbesondere in der Beschreibung zu den Figuren ist die zweite Befestigungseinrichtung als Schraube, vorzugsweise mit einer Hülse, dargestellt. Die vorliegende Erfindung ist hierauf jedoch nicht beschränkt. Sie umfasst vielmehr auch die Möglichkeit, dass die zweite Befestigungsvorrichtung als Stift, Zapfen und dergleichen, jeweils mit Hülse oder ohne, ausgestaltet ist. Von der vorliegenden Offenbarung ist somit auch umfasst, die zweite Befestigungseinrichtung nicht zum Einschrauben, sondern oder zum anderweitigen Einbringen und/oder Fixieren in das bzw. im zweiten Werkstück auszugestalten.

### Verwendete Bezugszeichen

- 1: Distanzscheibe
- 100: zweite Befestigungseinrichtung
- 101: Schaft
- 103: Kopf
- 105: Profil zum Einbringen eines Werkzeugs
- 190: Flanken des Kopfs
- 200: Trägerstruktur; zweites Werkstück
- 201: Aufnahme; Bohrung
- 203: Oberfläche der Trägerstruktur
- 205: Freiraum
- 300: Befestigungssystem
- 400: Fachboden; erstes Werkstück
- 500: erste Befestigungseinrichtung
- 501: Öffnung

- 700: Fräser
- 710: Kern
- 713: Schneideeinrichtung
- 713a, b, c, d: Schneiden
- 720: zylindrischer, fräsender Abschnitt
- 730: Einspannabschnitt

- 800: Hülse
- 801: Flanken
- 803: Abschnitt
- 805: äußere Flanken
- 810: Keilabschnitt
- 820: zylindrischer Abschnitt

- 900: Schablone
- 901: Schablonenaussparung
- 903: Schablonenaussparung
- 905: Schablonenaussparung
- 907: Schablonenaussparung
- 909: Schablonenmaterial

- A: Anfang des Fräswegs
- D1: stirnseitiger Durchmesser der Hülse
- D2: Durchmesser der Distanzscheibe
- E: Ende des Fräswegs
- F: Fräsweg
- H: Hinterschneidung
- L: Längsachse des Fräsers
- S: Spalt
- T, T+X: Nuttiefen
- V: Verbreiterung
- W1: erstes Werkstück

## Patentansprüche

1. Befestigungssystem (300), welches wenigstens eine erste Befestigungseinrichtung (500) mit einem ersten Schnittprofil und wenigstens eine zweite Befestigungseinrichtung (100) mit einem zweiten Schnittprofil aufweist, zum Verbinden wenigstens eines ersten Werkstücks (W1), z. B. eines Fachbodens (400), mit einem zweiten Werkstück, z. B. einer Trägerstruktur (200),
**dadurch gekennzeichnet, dass**
das erste Schnittprofil und das zweite Schnittprofil derart ausgestaltet sind, dass die erste Befestigungseinrichtung (500) und die zweite Befestigungseinrichtung (100) mittels des ersten und des zweiten Schnittprofils form- und/oder kraftschlüssig miteinander verbindbar sind,
wobei die erste Befestigungseinrichtung (500) eine in das erste Werkstück (W1) gefräste Nut ist;
wobei die zweite Befestigungseinrichtung (100) zum Einschrauben in das zweite Werkstück ausgestaltet ist.

2. Befestigungssystem (300) nach Anspruch 1, wobei die zweite Befestigungseinrichtung (100) eine Hülse (800) mit einer Durchgangsöffnung sowie eine durch oder in die Durchgangsöffnung geführte Schraube ist oder solche umfasst.

3. Befestigungssystem (300) nach einem der vorangegangenen Ansprüche, wobei die Nut im ersten Werkstück (W1) entlang eines Fräswegs (F) mit einem Anfang (A) und einem Ende (E) verläuft, wobei der Fräsweg (F) in einer Ebene des ersten Werkstücks (W1) liegt, und wobei weder der Anfang (A) noch das Ende (E) des Fräswegs (F) Teil eines Randes des ersten Werkstücks (W1) in dieser Ebene ist.

4. Befestigungssystem (300) nach einem der vorangegangenen Ansprüche, wobei die Nut im ersten Werkstück (W1) entlang eines Fräswegs (F) verläuft, wobei der Fräsweg (F) im ersten Werkstück (W1) einen gekrümmten Verlauf hat.

5. Befestigungssystem (300) nach einem der vorangegangenen Ansprüche, weiter aufweisend wenigstens einen lösbar in die Nut einsetzbaren oder eingesetzten Stopper oder Anschlag zum Begrenzen einer Verschiebbarkeit der zweiten Befestigungseinrichtung (100) entlang der Nut.

6. Befestigungssystem (300) nach einem der vorangegangenen Ansprüche, wobei die Nut oder ihr Nutgrund nicht parallel zur Oberfläche des ersten Werkstücks (W1) verläuft, sondern unter zu- oder abnehmendem Abstand zu Letzterer.

7. System zum Befestigen, insbesondere lösbaren Befestigen, von wenigstens zwei Komponenten eines Möbelsystems, umfassend:
- wenigstens einen Fräser (700) zum Fräsen einer Nut in einem ersten Werkstück (W1) als eine erste Befestigungseinrichtung (500), wobei der Fräser (700) zum Fräsen eines ersten Schnittprofils konfiguriert ist; und weiter
- wenigstens eine zweite Befestigungseinrichtung (100), welche eine Hülse (800) sowie eine Schraube zum Durchführen durch die Hülse (800) ist oder aufweist, wobei die zweite Befestigungseinrichtung (100) ein erstes Schnittprofil aufweist, wobei das erste Schnittprofil und das zweite Schnittprofil derart ausgestaltet sind, dass die erste Befestigungseinrichtung (500) und die zweite Befestigungseinrichtung (100) mittels des ersten und des zweiten Schnittprofils form- und/oder kraftschlüssig miteinander verbindbar sind, und/oder
- wenigstens ein Befestigungssystem (300) nach einem der vorangegangenen Ansprüche.

8. System nach Anspruch 7, wobei der Fräser (700) wenigstens eine stirnseitige Schneide (713a) aufweist.

9. System nach einem der Ansprüche 7 bis 8, wobei der Fräser (700) wenigstens zwei sich senkrecht zu einer Längsachse (L) des Fräsers (700) erstreckende Schneiden (713a, 713c) aufweist.

10. System nach einem der Ansprüche 7 bis 9, wobei der Fräser (700) wenigstens eine sich parallel zur Längsachse (L) des Fräsers (700) erstreckende Schneide (713d) aufweist.

11. Möbelsystem, insbesondere Regalsystem, mit wenigstens einem Befestigungssystem (300) nach einem der Ansprüche 1 bis 6.

12. Möbelsystem nach Anspruch 11, wobei die Nut mittels des Fräsers (700) des Systems nach einem der Ansprüche 7 bis 10 gefräst ist.

13. Möbelsystem nach einem der Ansprüche 11 bis 12, wobei eine Hülse (800), durch welche eine Schraube hindurchgeführt ist, zumindest abschnittsweise in die Nut eingeschoben ist.

14. Verfahren zum Vorbereiten eines ersten Werkstücks (W1) zu seiner Verbindung mit einem zweiten Werkstück, umfassend die Schritte:
- Bereitstellen eines Systems nach einem der Ansprüche 7 bis 10;
- Bereitstellen eines ersten Werkstücks (W1) und eines zweiten Werkstücks;
- Erzeugen einer Nut im ersten Werkstück (W1) mittels des Fräsers (700) des Systems;
- Einschrauben oder anderweitiges Einbringen eines zweiten Befestigungsmittels (100) in das zweite Werkstück.

15. Verfahren nach Anspruch 14, weiter umfassend die Schritte:
- Fräsen, im ersten Werkstück (W1), eines Fräswegs (F) mit einem Anfang (A) und einem Ende (E) mittels des Fräsers (700) zum Erzeugen der Nut, wobei der Fräsweg (F) in einer Ebene des ersten Werkstücks (W1) liegt, und wobei der Fräser (700) am Anfang (A) in das erste Werkstück (W1) eintritt und am Ende (E) wieder aus dem ersten Werkstück (W1) austritt.
